# EUROPEAN PATENT APPLICATION

(11) **EP 4 394 927 A1**
(43) Date of publication of application: **03.07.2024**
(21) Application number: 22881217.8
(22) Date of filing: 07.09.2022
(51) Int. Cl.: H01M 4/36, H01M 4/62, H01M 4/525, H01M 4/505, H01M 10/052, H01M 4/02

(54) **POSITIVE ELECTRODE ACTIVE MATERIAL COMPOSITE FOR BATTERY, SECONDARY BATTERY ELECTRODE, AND SECONDARY BATTERY**

(30) Priority: 15.10.2021 KR 20210137901
(71) Applicant: Dongjin Semichem Co., Ltd., Incheon 22824 (KR)
(72) Inventor: AN, Woohyun, Seongnam-si, Gyeonggi-do 13486 (KR); KIM, Seungdoo, Seongnam-si, Gyeonggi-do 13486 (KR); LIM, Chanhyuk, Seongnam-si, Gyeonggi-do 13486 (KR); LEE, Joocheol, Seongnam-si, Gyeonggi-do 13486 (KR); YANG, Hwichan, Seongnam-si, Gyeonggi-do 13486 (KR)
(74) Representative: Grünecker Patent- und Rechtsanwälte PartG mbB
(86) International application number: PCT/KR2022/013488
(87) International publication number: WO 2023/063588

(57) **Abstract**

The present disclosure relates to a positive electrode active material composite which is for a battery and is coated with reduced graphene oxide, and specifically, to a positive electrode active material composite comprising: a core portion including a positive electrode active material; and a shell portion surrounding the core portion, wherein the shell portion includes at least one layer of reduced graphene oxide (rGO), thus making it possible to obtain a secondary battery having excellent electronic conductivity and energy density.

## Description

### [TECHNICAL FIELD]

The present disclosure relates to a cathode active material composite for a battery, which is coated with reduced graphene oxide, a secondary battery electrode, and a secondary battery.

### [BACKGROUND ART]

Recently, as the demand for applying lithium secondary batteries to transportation means has increased, the demand for high capacity and high energy density batteries is rapidly increasing. For the development of high-capacity batteries, the thickness of the electrodes needs to be increased, and an effective conductive path needs to be formed in order to give electrons to or receive the electrons from the current collector. Among them, graphene, a next-generation material, has excellent electronic conductivity, may provide high-dimensional (high shape anisotropic) contact, and is in the spotlight for its excellent physical properties.

As a conventional method of increasing the electronic conductivity of an active material using graphene, there is a method using a dry wet coating method of preparing a graphene dispersion containing a carbon material (graphene), a dispersant, and a solvent, and then putting/mixing the active material and a binder solution into the graphene dispersion, thereby drying it.

However, even if a highly dispersible graphene dispersion was used, there was a problem in that it was difficult to maintain a uniform composition of graphene inside the electrode due to the attractive force between graphene during the electrode manufacturing process and solvent drying process. Accordingly, in order to provide a sufficient conductive effect, a large amount of graphene material should be mixed during manufacturing, but a large amount of graphene material cannot contribute to the capacity of the battery, which has the disadvantage of lowering the energy density of the electrode.

### [DETAILED DESCRIPTION OF INVENTION]

### [TECHNICAL PROBLEMS]

In order to solve the problems of the related art as described above, an object of the present disclosure is to provide a cathode active material composite for a battery, which may improve the energy density of the electrode by realizing higher conductivity than the conventional graphene wet-coated cathode active material.

Another object of the present disclosure is to provide a secondary battery electrode with low internal resistance and high energy density by including the cathode active material composite for a battery.

Another object of the present disclosure is to provide a secondary battery with improved efficiency and lifespan by including the secondary battery electrode as a cathode.

### [TECHNICAL SOLUTION]

In order to achieve the above object, a cathode active material composite for a battery according to one aspect of the present disclosure includes a core portion containing a cathode active material and a shell portion formed to surround the core portion, wherein the shell portion includes one or more layers of reduced graphene oxide (rGO).

The shell portion may have an average thickness of 3 nm to 31 nm. In addition, the thickness deviation at each location of the shell portion may be within 55% of the average thickness of the shell portion.

The reduced graphene oxide may contain 2 to 12% by weight of oxygen (O) relative to graphene oxide, and reduced graphene oxide may have an aspect ratio (long axis/thickness ratio) of 500 to 20,000.

The cathode active material composite may have a BET(Brunauer, Emmett, Teller) specific surface area of 0.3 m²/g to 5 m²/g.

Reduced graphene oxide may be dry-coated to form one or more layers and may be contained in the shell portion, and specifically, reduced graphene oxide may be dry-coated using a mechano-fusion device. More specifically, reduced graphene oxide may be dry-coated by operating the mechano-fusion device at 1,000 to 10,000 rpm for 10 to 30 minutes.

A secondary battery electrode according to another aspect of the present disclosure includes the cathode active material composite.

A secondary battery according to another aspect of the present disclosure includes the secondary battery electrode as a cathode.

### [EFFECT OF INVENTION]

The cathode active material composite for a battery according to the present disclosure has excellent electronic conductivity due to easy formation of a conductive network, has a low specific surface area to be able to suppress the increase in internal resistance of the electrode due to side reactions with an electrolyte solution, and is included in the electrode to have the effect of improving the electrolyte solution impregnation rate and allowing ions to easily diffuse due to an excellent developed pore structure.

In addition, the secondary battery including the cathode active material composite according to the present disclosure has high battery efficiency due to excellent electronic conductivity and ionic conductivity of the electrode, and thus can realize high charge and discharge capacity. In addition, side reactions between the cathode active material and the electrolyte solution are suppressed so that there is an effect that the battery has excellent lifespan characteristics.

### [BRIEF DESCRIPTION OF THE DRAWINGS]

FIG. 1 briefly shows the structure of a cathode active material composite for a battery according to one aspect of the present disclosure.
FIG. 2A is an image of one side of the core portion (NCM 811) and the shell portion (Graphene) of the cathode active material composite 10 for an electrode according to one embodiment of the present disclosure photographed with a transmission electron microscope (TEM).
FIG. 2B is an image of another side of the core portion (NCM 811) and the shell portion (Graphene) of the cathode active material composite 10 for an electrode according to one embodiment of the present disclosure photographed with a transmission electron microscope (TEM).
FIG. 2C is an image of another side of the core portion (NCM 811) and the shell portion (Graphene) of the cathode active material composite 10 for an electrode according to one embodiment of the present disclosure photographed with a transmission electron microscope (TEM).
FIG. 3 shows data analyzed by energy dispersive spectroscopy (EDS) on some of the constituent elements of the cathode active material composite for a battery according to one embodiment of the present disclosure.
FIG. 4A is a scanning electron microscope (SEM) image obtained by photographing the overall shape of a cathode active material composite for a battery (Example 3) according to one embodiment of the present disclosure.
FIG. 4B is a scanning electron microscope (SEM) image obtained by photographing the overall shape of a bare cathode active material (Comparative Example 1).
FIG. 4C is a scanning electron microscope (SEM) image obtained by photographing the overall shape when the cathode active material was dry-coated with carbon black (Comparative Example 3).
FIG. 5A is a scanning electron microscope (SEM) image taken by enlarging the surface of FIG. 4A.
FIG. 5B is a scanning electron microscope (SEM) image taken by enlarging the surface of FIG. 4B.
FIG. 5C is a scanning electron microscope (SEM) image taken by enlarging the surface of FIG. 4C.
FIG. 6 shows the discharge capacities to C-rates for Example 1, Comparative Example 1, and Comparative Example 3 of the present disclosure.
FIG. 7 shows electrochemical impedance spectroscopy (EIS) data for Example 1, Comparative Example 1, and Comparative Example 3 of the present disclosure.
FIG. 8A is an SEM image of an electrode (Example 3) manufactured according to one embodiment of the present disclosure.
FIG. 8B is an SEM image of an electrode (Comparative Example 4) in which rGO was simply stirred with a cathode active material.

### [BEST MODE FOR CARRYING OUT THE INVENTION]

Terms or words used in this specification and claims should not be construed as limited to their common or dictionary meanings, and they should be interpreted as meanings and concepts consistent with the technical idea of the present disclosure based on the principle that the inventor can appropriately define the concept of the terms in order to explain his or her invention in the best way.

Therefore, the configurations shown in the Examples and Preparation Examples described in this specification are only one of the most preferred embodiments of the present disclosure, and do not represent the entire technical idea of the present disclosure, so it should be understood that there may be various equivalents and variations capable of replacing them at the time of filing the present application.

Hereinafter, embodiments of the present disclosure will be described in detail so that those skilled in the art to which the present disclosure pertains can easily implement the present disclosure with reference to the drawings. However, the present disclosure may be implemented in various different forms and is not limited to the Preparation Examples and Examples described herein.

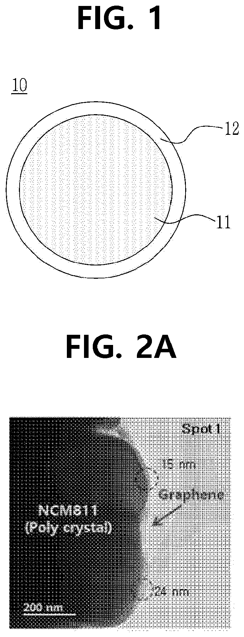

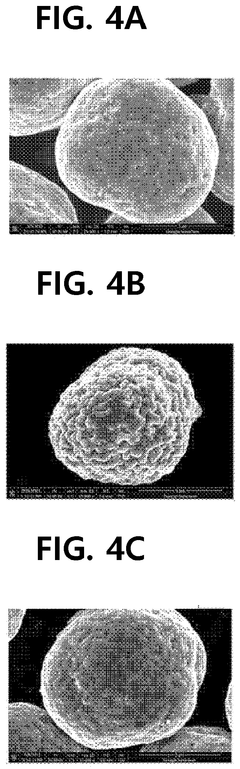

FIG. 1 briefly shows the structure of a cathode active material composite for a battery according to one aspect of the present disclosure. Referring to FIG. 1, the cathode active material composite 10 for a battery according to one aspect of the present disclosure includes a core portion 11 containing a cathode active material and a shell portion 12 formed to surround the core portion 11, wherein the shell portion (11) is characterized by including reduced graphene oxide (rGO) forming one or more layers. Specifically, FIG. 4A is a photograph of a cathode active material for a battery according to one embodiment of the present disclosure photographed using a scanning electron microscope (SEM).

In the cathode active material composite 10 of the present disclosure, the shell portion 12 has reduced graphene oxide flakes physically bonded to each other by Van der Waals interaction on the surface of the cathode active material, has a structure in which reduced graphene oxide is attached in a single layer or in layers, and forms one or more layers.

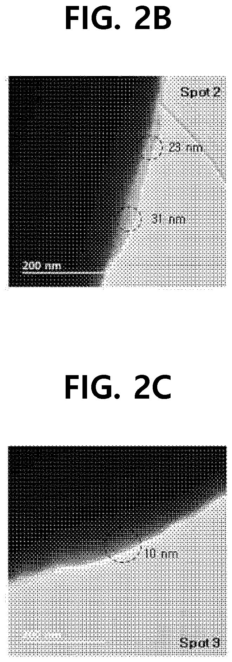

The shell portion 12 is formed after reduced graphene oxide flakes of nanoparticles are bonded to the surface of the cathode active material by Van der Waals forces, and the shell portion may be formed to be thin and uniform in thickness. In the present disclosure, the average thickness of the shell portion of the cathode active material composite means the thickness of graphene oxide reduced in the normal direction from the surface of the cathode active material, and means the average of the thickness measured at five or more different locations on the surface of the cathode active material composite. FIG. 2 is images of various sides of the core portion (NCM 811) and the shell portion (Graphene) of the cathode active material composite 10 for an electrode according to one embodiment of the present disclosure photographed with a transmission electron microscope (TEM), and indicates the thickness of the shell portion at each side. FIG. 2A is an image of one side of the core portion (NCM 811) and the shell portion (Graphene) of the cathode active material composite 10 for an electrode according to one embodiment of the present disclosure photographed with a transmission electron microscope (TEM). FIG. 2B is an image of another side of the core portion (NCM 811) and the shell portion (Graphene) of the cathode active material composite 10 for an electrode according to one embodiment of the present disclosure photographed with a transmission electron microscope (TEM). FIG. 2C is an image of another side of the core portion (NCM 811) and the shell portion (Graphene) of the cathode active material composite 10 for an electrode according to one embodiment of the present disclosure photographed with a transmission electron microscope (TEM). Referring to FIGS. 2A to 2C, it can be seen that the shell portion is partially formed to a thickness of 15 nm, 24 nm, 23 nm, 31 nm, and 10 nm, respectively. Specifically, it is advantageous in terms of improved conductivity due to graphene and battery capacity of the cathode active material that the shell portion has an average thickness of 3 nm to 31 nm. When the thickness of the shell portion is less than 3 nm, the electronic conductivity of the cathode active material is greatly reduced, which may lead to a significant decrease in capacity when applied to a battery, and when the thickness of the shell portion is thicker than 31 nm, the diffusivity of lithium ions into the cathode active material is reduced, so there is a problem of low capacity development.

Reduced graphene oxide contained in the shell portion forms one or more layers by van der Waals forces in the form of nanoflakes, and the shell portion may be formed to a thin and uniform thickness. When the thickness deviation at each position of the shell portion is defined as the difference between the maximum thickness of the shell portion and the average thickness of one cathode active material composite or the difference between the minimum thickness thereof and the average thickness of one cathode active material composite, the thickness deviation at each position of the shell portion may be within 55% of the average thickness of the shell portion. For example, referring to FIG. 2, the average thickness of five different points (15 nm, 24 nm, 23 nm, 31 nm, and 10 nm) on the surface of one cathode active material composite of FIG. 2 according to one embodiment of the present disclosure is 20.6 nm. At this time, the difference between the average thickness (20.6 nm) and the minimum thickness (10 nm) is 10.6 nm, which is 51.5% of the average thickness value, and the difference between the average thickness (20.6 nm) and the maximum thickness (31 nm) is 10.4 nm, which is 50.5% of the average thickness value. When the thickness deviation exceeds 55% of the average thickness, lithium ions and electron transfer may occur locally, resulting in poor uniformity in the performance of the cathode active material composite and deterioration of the lifespan of the battery.

In addition, when the shell portion is formed by coating reduced graphene oxide on the surface of the core portion through dry coating, the reduced graphene oxide flake particles bonded to the maximum thickness part of the shell portion are detached from the shell portion during the dry coating process so that it may become very easy to physically bond to the minimum thickness part of the shell portion, and the thickness deviation of the shell portion may be easily adjusted to 55% or less of the average thickness.

The core portion of the cathode active material for a battery of the present disclosure can be used without limitation as long as it is a cathode active material used in secondary batteries, and for example, LiCoO₂ (LCO), Li[Ni,Co,Mn]O₂ (NCM), Li[Ni,Co, Al]O₂ (NCA), LiMn₂O₄ (LMO), LiFePO₄ (LFP), or the like may be used. Specifically, NCM 811 composed of nickel (Ni), cobalt (Co), and manganese (Mn) may be used, but there is no particular limitation as long as reduced oxidation graphene may form a shell portion on the surface of the cathode active material.

The shell portion of the cathode active material for a battery of the present disclosure is formed by including reduced graphene oxide, and contains carbon and oxygen. The cathode active material of the core portion has a hydrophilic surface due to impurities such as LiOH and Li₂CO₃ during the synthesis process. At this time, oxygen contained in reduced graphene oxide imparts hydrophilicity to reduced graphene oxide, helping to facilitate physical bonding between reduced graphene oxide and the cathode active material of the core portion. Reduced graphene oxide contained in the shell portion specifically contains 2 to 12% by weight of oxygen (O) compared to graphene oxide, which is advantageous when considering uniform coating and electronic conductivity. When reduced graphene oxide of the shell portion contains less oxygen (O) in an amount less than the above range, reduced graphene oxide is not sufficiently attached to the surface of the cathode active material through physical bonding so that there may be a problem of making it difficult to form the shell portion. When oxygen is contained in a larger amount than the above range, there may be a problem of greatly reducing electronic conductivity.

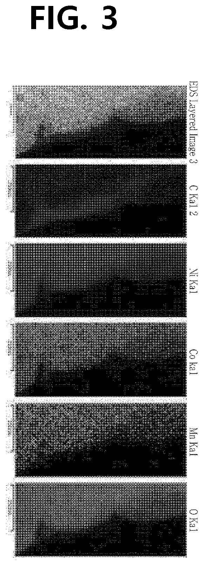

FIG. 3 shows EDS analysis of some of the constituent elements of the cathode active material composite for a battery according to one embodiment of the present disclosure, Ni, Co, and Mn are observed for the cathode active material using NCM 811 in the Examples, and it can be seen that C and O are observed as elements of graphene oxide along with that.

The shape of reduced graphene oxide may affect the process of coating the cathode active material of the core portion. Specifically, the shape of the shell portion is determined by the shape of reduced graphene oxide, and the aspect ratio (long axis/thickness ratio) among the shapes of reduced graphene oxide may serve as the most important factor. In the present disclosure, the aspect ratio (long axis/thickness ratio) of reduced graphene oxide means the ratio of the maximum length (width) and thickness of the plate of reduced graphene oxide, and specifically means the ratio of the maximum length (long axis) and thickness of the plate shape in reduced graphene oxide formed in a single-layer or multi-layer structure of the plate shape. According to the above definition, when the aspect ratio of reduced graphene oxide is less than 500, the cohesion between graphene surfaces becomes excessively strong so that there may be a difficulty in uniform coating, and when it exceeds 20,000 and thus the graphene surfaces become thin and wide, since lithium ions may bypass graphene, and thus there may be a demerit of lengthening the path for penetration, so it may be preferred that the aspect ratio of reduced graphene oxide is 500 to 20,000.

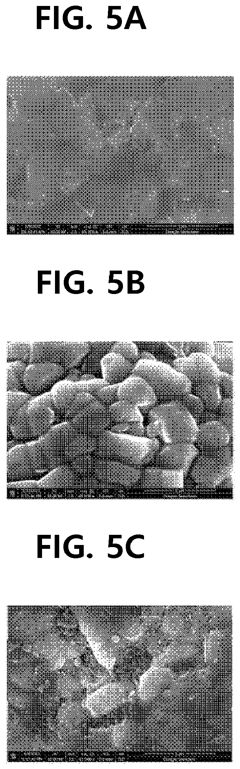

The smaller the specific surface area of the cathode active material composite, the more suppressed side reactions with the electrolyte solution within the electrode are, so the lower the specific surface area, the more advantageous it is. The specific surface area of the cathode active material composite may be adjusted by adjusting the average thickness of the shell portion. Specifically, as the average thickness of the shell portion becomes thicker, the specific surface area of the cathode active material composite tends to decrease, and conversely, as the average thickness of the shell portion becomes thinner, the specific surface area of the composite tends to increase. The cathode active material composite for a battery of the present disclosure may be formed in the shape shown in FIG. 4A as an Example, and the surface may be formed as shown in FIG. 5A (Example 3), so that the specific surface area of FIG. 5B may be significantly lower than that of the cathode active material (b, Comparative Example 1); or when the cathode active material is dry-coated with carbon black in FIG. 5C (c, Comparative Example 3). Specifically, the cathode active material composite according to one embodiment of the present disclosure may have a specific surface area of 0.3 m²/ g to 5 m²/g. Due to the nature of reduced graphene oxide attaching to the surface of the cathode active material in the form of flakes and forming a shell, it is difficult to form a cathode active material composite with a specific surface area of less than 0.3 m²/g, and in case of the specific surface area exceeding 5 m²/g, when reduced graphene oxide is included in the electrode, the frequency of side reactions with the electrolyte solution increases significantly, there may be a problem of forming too many side reaction layers that increase the internal resistance of the electrode along with gas generation.

Reduced graphene oxide forms one or more layers on the surface of the core portion of the cathode active material, and in order to realize the low specific surface area of the composite and high porosity when included in the electrode, it may be preferred that reduced graphene oxide is dry-coated in the process of forming the shell portion. Dry coating, unlike conventional wet coating, has characteristics in that particles of reduced graphene oxide are combined by electrostatic attraction to form a shell portion, and a separate dispersant is not required. Therefore, the problem of increased internal resistance of the electrode caused by a dispersant remaining in conventional wet coating may be solved. In addition, in the case of dry coating, the composite has high compressive strength, so the porosity of the electrode after rolling may increase compared to wet coating or carbon materials, and the high porosity of the electrode may improve the electrolyte solution impregnation rate. Due to this, the diffusion speed of lithium ions in the battery may be accelerated, so there is the effect of improving battery efficiency. In addition, as described above, there is also the effect of adjusting the thickness deviation of the shell portion through dry coating.

The method of dry-coating the core portion with reduced graphene oxide in order to form the shell portion is not particularly limited, but dry coating may be possible more efficiently when reduced graphene oxide is dry-coated using a mechano-fusion device. When the mechano-fusion device is used in the process of forming the cathode active material composite of the present disclosure, which is a method of fusing nanoparticles to the surface of large particles by applying mechanical energy to the particle surface using compression and shear forces, reduced graphene oxide, which is flake-shaped nanoparticles, may be fused to the surface of the cathode active material, which is relatively large particles corresponding to the core portion, and a cathode active material composite may be formed. When the mechano-fusion device is used, graphene oxide reduced by compression may be pulverized into nanoparticles, and graphene oxide particles reduced by shear force may be evenly dispersed across the surface of the cathode active material, and the cathode active material and reduced graphene oxide may be combined by van der Waals force.

When dry coating is performed using a mechano-fusion device, the mechano-fusion device may be operated at 1,000 to 10,000 rpm for 10 to 30 minutes, and it may be preferred that the mechano-fusion device is operated for effective dry coating, for example, at 6,000 to 10,000 rpm for 10 to 30 minutes.

The secondary battery electrode according to another aspect of the present disclosure is characterized by including the cathode active material composite according to the present disclosure. The secondary battery electrode may not use a dispersant due to the cathode active material composite. In addition, the electrode may be specifically applied to the cathode by including a cathode active material.

The secondary battery according to another aspect of the present disclosure is characterized by including the secondary battery electrode as a cathode. The secondary battery may be, for example, a lithium secondary battery, but it may be applied without being particularly limited to types of secondary batteries such as lead acid batteries, nickel-cadmium batteries, nickel-hydrogen batteries, and lithium-ion batteries depending on the types of cathode active materials.

Hereinafter, preferred examples are presented to aid understanding of the present disclosure, but the following Examples are merely illustrative of the present disclosure and the scope of the present disclosure is not limited to the following Examples.

### [Preparation Example: Preparation of cathode active material composite]

20 g of NCM811 cathode active material (L&F Co., Ltd, NIB-X10B) and 0.2 g of reduced graphene oxide (rGO) flakes (100:1 ratio) were put into dry coating (mechano-fusion) equipment (FRISTCH, PULVERISETTE 14), and coating was performed at 8000 rpm for 10 minutes to prepare a cathode active material composite (Example 3), which is an Example of the present disclosure. Examples 1 to 7 were prepared by varying the ratio of the cathode active material and reduced graphene oxide in order to change the thickness of the shell portion. In addition, Examples 8 to 24 are those in which the aspect ratio (500 to 20,000) of rGO, the thickness deviation of the shell portion, and oxygen content were changed, and in order to compare the effect with the Examples, Reference Example 1 and Comparative Examples 1 to 5, in which the configuration or coating method of the shell portion was vary, were prepared together. The constituent materials and coating methods of Examples and Comparative Examples are shown in Table 1 below. At this time, in the Reference Example 1 and Comparative Examples of Table 1, 'aspect ratio satisfaction' means a case in which the aspect ratio (long axis/thickness ratio) of graphene is 500 to 20,000.

**[Table 1]**

| | Cathode active material | Shell portion (coating material) | Coating method |
|---|---|---|---|
| Examples 1 to 25 | Li[NiCoMn]O₂ | rGO | Dry coating |
| Reference Example 1 | Li[NiCoMn]O₂ | rGO(aspect ratio satisfaction) | Wet coating |
| Comparative Example 1 | Li[NiCoMn]O₂ | X(bare) | - |
| Comparative | Li[NiCoMn]O₂ | Carbon black | Wet coating |
| Example 2 | | | |
| Comparative Example 3 | Li[NiCoMn]O₂ | Carbon black | Dry coating |
| Comparative Example 4¹⁾ | Li[NiCoMn]O₂ | rGO(aspect ratio satisfaction) | Electrode coating (High pressure dispersion and simple stirring) |
| Comparative Example 5 | Li[NiCoMn]O₂ | GO (aspect ratio satisfaction), Insufficient electron transfer due to very low conductivity | Dry coating |

| | | | |
|---|---|---|---|
| 1) In the case of the electrode coating of Comparative Example 4, no shell portion was formed due to simple stirring. | | | |

### [Experimental Example 1: Evaluation of physical properties of cathode active material composite]

For Examples 1 to 24 prepared according to Preparation Example 1, the average thickness of the shell portion was measured by transmission electron microscope (TEM) analysis, the specific surface area of the composite was measured by a BET specific surface area measuring instrument, and the aspect ratio of rGO was measured by an atomic force microscope (AFM), the oxygen content of the shell portion was measured through the method of X-ray photoelectron spectroscopy (XPS), and the results are shown in Table 2 below.

**[Table 2]**

| | Average thickness of shell portion (nm) | Specific surface area of composite (m²/g) | Aspect ratio of rGO | Thickness deviation of shell portion (average thickness %) | Oxygen content of shell portion (%) |
|---|---|---|---|---|---|
| Example 1 | 3 | 3.75 | 3379 | Within 55% | 2 |
| Example 2 | 8 | 1.95 | 3379 | Within 55% | 2 |
| Example 3 | 17 | 0.74 | 3379 | Within 55% | 2 |
| Example 4 | 25 | 0.59 | 3379 | Within 55% | 2 |
| Example 5 | 30 | 0.32 | 3379 | Within 55% | 2 |
| Example 6 | 1.5 | 4.93 | 3379 | Within 55% | 2 |
| Example 7 | 35 | 0.27 | 3379 | Within 55% | 2 |
| Example 8 | 17 | 0.79 | 350 (7*µ*m,20nm) | Within 55% | 2 |
| Example 9 | 17 | 0.72 | 500 (5*µ*m, 10nm) | Within 55% | 2 |
| Example 10 | 17 | 0.73 | 10000 (20*µ*m, 2nm) | Within 55% | 2 |
| Example 11 | 17 | 0.71 | 15000 (30*µ*m, 2nm) | Within 55% | 2 |
| Example 12 | 17 | 0.74 | 19500 (3*µ*m, 2nm) | Within 55% | 2 |
| Example 13 | 17 | 0.70 | 25000 (50*µ*m, 2nm) | Within 55% | 2 |
| Example 14 | 17 | 0.74 | 3379 | Within 20% | 2 |
| Example 15 | 17 | 0.74 | 3379 | Within 25% | 2 |
| Example 16 | 17 | 0.74 | 3379 | Within 30% | 2 |
| Example 17 | 17 | 0.74 | 3379 | Within 45% | 2 |
| Example 18 | 17 | 0.74 | 3379 | Within 65% | 2 |
| Example 19 | 17 | 0.74 | 3379 | Within 55% | 1 |
| Example 20 | 17 | 0.74 | 3379 | Within 55% | 4 |
| Example 21 | 17 | 0.74 | 3379 | Within 55% | 6 |
| Example 22 | 17 | 0.74 | 3379 | Within 55% | 8 |
| Example 23 | 17 | 0.74 | 3379 | Within 55% | 12 |
| Example 24 | 17 | 0.74 | 3379 | Within 55% | 15 |
| Example 25 | 1 | 5.52 | 3379 | Within 55% | 2 |

### [Preparation Example 2: Preparation of secondary battery cathode]

The total solids in which 20 g of each of the Examples and Comparative Examples of Preparation Example 1, 0.2040 g of a mixture of carbon nanotubes and carbon black (weight ratio of carbon nanotubes and carbon black = 50:50), and 0.2040 g of a PVDF binder were mixed at a weight ratio of 98:1:1 were dispersed in NMP (solvent) to prepare a cathode slurry with a total solid content of 76% by weight. The cathode slurry was stirred at 800 rpm for 20 minutes using Thincky mixer. Thereafter, the stirred cathode slurry was cast using a blade, and then the solvent was dried to prepare an electrode with a loading amount of 16 mg/cm².

### [Experimental Example 2: Evaluation of physical properties of secondary battery cathode]

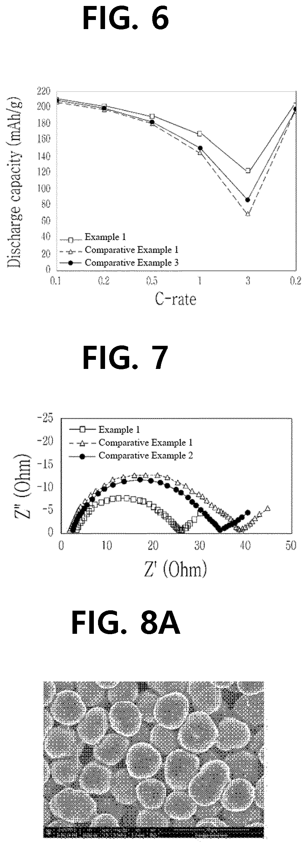

With respect to the secondary battery cathode prepared according to Preparation Example 2, the physical properties and electrochemical properties of the secondary battery cathode containing the cathode active material composite of each of Examples and Comparative Examples were measured by a charge/discharge evaluation method and a method using a powder resistor, and the results are shown in Table 3 below. In addition, for Example 1, Comparative Example 1, and Comparative Example 3, the discharge capacities relative to the C-rates are shown in FIG. 6, and the electrochemical impedance spectroscopy (EIS) measurement results are shown in FIG. 7.

The electrolyte was used as a composition in which 1.15 M of LiPF₆ was added to a DMC/FEC=7/3 (v/v) solution. The cathode is composed of an active material, a conductive material, and a binder, and the active material, the conductive material, and the binder are mixed in % by weight of 98:1:1. PvdF was used as the binder, and about 6% by weight of solid PvdF was added to the NMP solvent.

**[Table 3]**

| | 3C high rate charge/discharge capacity (compared to 0.1C capacity, %) | Powder conductivity (63.66 MPa, S/cm) |
|---|---|---|
| Example 1 | 58.7 | 2.7 * 10⁻² |
| Example 2 | 60.4 | 3.2 * 10⁻² |
| Example 3 | 60.9 | 4.1 * 10⁻² |
| Example 4 | 55.9 | 5.6 * 10⁻² |
| Example 5 | 52.7 | 6.1 * 10⁻² |
| Example 6 | 50.3 | 2.0 * 10⁻² |
| Example 7 | 49.4 | 7.7 * 10⁻² |
| Example 8 | 47.2 | 3.1 * 10⁻² |
| Example 9 | 54.3 | 3.5 * 10⁻² |
| Example 10 | 58.1 | 4.7 * 10⁻² |
| Example 11 | 53.7 | 5.2 * 10⁻² |
| Example 12 | 50.2 | 5.4 * 10⁻² |
| Example 13 | 45.3 | 5.9 * 10⁻² |
| Example 14 | 61.6 | 4.5 * 10⁻² |
| Example 15 | 61.3 | 4.4 * 10⁻² |
| Example 16 | 61.0 | 4.2 * 10⁻² |
| Example 17 | 58.7 | 4.1 * 10⁻² |
| Example 18 | 53.4 | 3.9 * 10⁻² |
| Example 19 | 50.4 | 5.8 * 10⁻² |
| Example 20 | 61.0 | 2.4 * 10⁻² |
| Example 21 | 58.1 | 1.1 * 10⁻² |
| Example 22 | 53.6 | 8.7 * 10⁻³ |
| Example 23 | 52.8 | 5.3 * 10⁻³ |
| Example 24 | 49.7 | 2.1 * 10⁻³ |
| Example 25 | 47.3 | 1.8 * 10⁻² |
| Reference Example 1 | 40.3 | 4.8 * 10⁻³ |
| Comparative Example 1 | 35.3 | 1.1 * 10⁻⁴ |
| Comparative Example 2 | 20.4 | 2.2 * 10⁻³ |
| Comparative Example 3 | 38.7 | 9.5 * 10⁻³ |
| Comparative Example 4 | 18.1 | - |
| Comparative Example 5 | 3.4 | 3.5 * 10⁻⁶ |

Referring to Table 3, it can be confirmed that all of the 3C high rate charge/discharge capacities of Examples 1 to 24 are overall higher than those of Comparative Examples 1 to 5 and Reference Example 1. In addition, it can be confirmed through FIG. 6 that the discharge capacities at 3C in Comparative Examples 1 and 3 are greatly reduced, but the discharge capacity retention rate in the case of Example 1 is maintained excellently compared to the Comparative Examples.

Referring to Tables 2 and 3 in terms of the aspect ratio of rGO among the Examples, it can be confirmed that the aspect ratio (350) of rGO in Example 8 and the aspect ratio (25000) of rGO in Example 13 deviate from the range of 500 to 20,000, and the high rate charge/discharge capacities of the remaining Examples in the range of 500 to 20,000 are measured to be higher than those of Examples 8 and 13. It can be seen through this that when the aspect ratio of rGO is 500 to 20,000, a more excellent high rate charge/discharge capacity is realized. In addition, it can be confirmed in Example 13 that when the aspect ratio increases, distortion of the path through which lithium ions diffuse occurs to cause powder conductivity to increase, but high rate charge/discharge capacity decreases.

In addition, referring to Tables 2 and 3 in terms of shell portion thickness, the shell portion in Example 6 has an average thickness of 1.5 nm, and the shell portion in Example 7 has an average thickness of 35 nm. Considering the dependent relationship between the thickness of the shell portion and the specific surface area of the composite, when comparing Example 3, where the average thickness of the shell portion belongs to 3 to 31 nm (17 nm) and other elements are the same, with Examples 6 and 7, it can be confirmed that the high rate charge/discharge capacity in Example 3 is excellent. That is, it can be seen that when the average thickness of the shell portion is 3 to 31 nm, the battery performance is exhibited to be more excellent.

Referring to Tables 2 and 3 in terms of the thickness deviation of the shell portion, Example 18 has a thickness deviation of the shell portion exceeding 55% (65%), and when comparing Example 18 with Example 3 in which other conditions are the same, it can be confirmed that Example 3 has a high rate charge/discharge capacity superior to that of Example 18. Through this, it can be seen that when the thickness deviation of the shell portion is within 55%, the performance of the battery is exhibited to be more excellent. In addition, it can be confirmed that Examples 14 to 16, in which the thickness uniformity of the shell portion is more excellent (smaller thickness deviation), show more excellent high rate charge/discharge capacities than that of Example 3 in which other elements are the same. This can be interpreted because as the thickness uniformity of the shell portion increases, Li ions may flux more uniformly into the composite.

Referring to Tables 2 and 3 in terms of the oxygen content of the shell portion, it can be confirmed that in the case of Examples 20 to 24 with high oxygen content, the powder conductivity decreases as the oxygen content increases compared to Example 3 under the same conditions, and it can be confirmed that in the case of Example 24 with particularly high oxygen content, both powder conductivity and high rate charge/discharge capacity are greatly reduced. In addition, it can be confirmed that in the case of Example 19 with low oxygen content of the shell portion, the high rate charge/discharge capacity is greatly decreased compared to that of Example 3. Through this, it can be seen that the battery performance is particularly excellent when the oxygen content of the shell portion is 2 to 12% by weight.

Comparing Examples 1 to 7 and 25 with each other in terms of BET specific surface area, the tendency that the 3C high rate charge/discharge capacity and powder conductivity are further increased can be confirmed when the cathode active material composite has a specific surface area of 0.3 to 5 m²/g.

In addition, FIG. 7 shows the electrochemical impedance spectroscopy (EIS) data of Example 1, Comparative Example 1, and Comparative Example 3. Referring to FIG. 7, it can be confirmed that Example 1 coated with reduced graphene oxide had a lower semicircle size (resistance of SEI formed as a side reaction layer + electron transfer resistance) than Comparative Example 1 without coating and Comparative Example 3 simply coated with carbon black, and this can be interpreted that Example 1 coated with reduced graphene oxide suppresses the formation of side reactants and appropriately forms an electron transfer path. In addition, the results in FIG. 7 can be interpreted as supporting the excellent discharge capacity retention effect of the Example shown in FIG. 6.

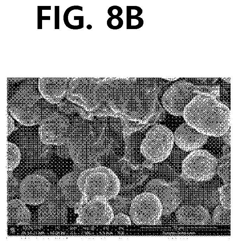

FIG. 8A is an SEM image of Example 3 in which the cathode active material was dry-coated with rGO and stirred at high speed, and FIG. 8B is an SEM image of Comparative Example 4 in which the cathode active material and rGO flakes were dispersed under high pressure and simply stirred. Referring to FIGS. 8A and 8B, it can be seen that the shape of the composite is well maintained in the case of the cathode (a) prepared according to the present disclosure, but when only rGO flakes are simply included without dry coating, it can be confirmed that an agglomeration phenomenon of the cathode active material occurs. Therefore, it can be seen that rGO is not simply included, but should be coated and included on the surface of the cathode active material to greatly contribute to improving battery performance.

Although the embodiments of the present disclosure have been described in detail above, the scope of rights of the present disclosure is not limited thereto, and it will be apparent to those skilled in the art that various modifications and variations can be made without departing from the technical spirit of the present disclosure as set forth in the claims.

## Claims

1. A cathode active material composite for a battery comprising:
a core portion containing a cathode active material; and
a shell portion formed to surround the core portion, wherein the shell portion includes one or more layers of reduced graphene oxide (rGO).

2. The cathode active material composite for a battery of claim 1, wherein the shell portion has an average thickness of 3 nm to 31 nm.

3. The cathode active material composite for a battery of claim 1, wherein the thickness deviation of the shell portion is 55% or below of the average thickness of the shell portion.

4. The cathode active material composite for a battery of claim 1, wherein the reduced graphene oxide contains 2 to 12% by weight of oxygen (O) relative to graphene oxide

5. The cathode active material composite for a battery of claim 1, wherein the reduced graphene oxide has an aspect ratio (long axis/thickness ratio) of 500 to 20,000.

6. The cathode active material composite for a battery of claim 1, wherein the cathode active material composite has a BET specific surface area of 0.3 m²/g to 5 m²/g.

7. The cathode active material composite for a battery of claim 1, wherein the reduced graphene oxide is dry-coated to form one or more layers and is contained in the shell portion.

8. The cathode active material composite for a battery of claim 7, wherein the reduced graphene oxide is dry-coated using a mechano-fusion device.

9. The cathode active material composite for a battery of claim 8, wherein the reduced graphene oxide is dry-coated by operating the mechano-fusion device at 1,000 to 10,000 rpm for 10 to 30 minutes.

10. A secondary battery electrode comprising the cathode active material composite for a battery of any one of claims 1 to 9.

11. A secondary battery comprising the secondary battery electrode of claim 10 as a cathode.
